(19) Europäisches Patentamt
European Patent Office
Office européen des brevets

(11) **EP 2 604 853 A1**

(12) **EUROPEAN PATENT APPLICATION**

(43) Date of publication:
**19.06.2013 Bulletin 2013/25**

(51) Int Cl.:
**F03D 7/04** $^{(2006.01)}$

(21) Application number: **11193824.7**

(22) Date of filing: **15.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Siemens Aktiengesellschaft**
**80333 München (DE)**

(72) Inventors:
• **Krishna, Ramakrishnan**
  **6900 Skjern (DK)**
• **Esbensen, Thomas**
  **7400 Herning (DK)**
• **Hoegh, Gustav**
  **7400 Herning (DK)**

(54) **Method of controlling a wind turbine**

(57)    The invention describes a method of controlling a wind turbine (1, 1_up, 1_down), which method comprises the steps of obtaining a number of operating values (110) relevant to a wind turbine (1, 1_up, 1_down); calculating a thrust setpoint (21, 21_up, 21_down) on the basis of the operating values (110); and controlling a wind turbine (1, 1_up, 1_down) according to a thrust setpoint (21, 21_up, 21_down). The invention also describes a wind park controller (20), a wind turbine controller (10), and a wind park (2).

FIG 3

EP 2 604 853 A1

**Description**

The invention describes a method of controlling a wind turbine, wind park controller for controlling a number of wind turbines of a wind park, wind turbine controller, and a wind park.

Wind turbines convert wind energy into electricity. A wind turbine is generally controlled by a wind turbine controller that regulates the power output and voltage output according to momentary requirements at a collector grid. For example, to increase the output of the wind turbine, a voltage or power setpoint is issued to the wind turbine, which then reacts by adjusting a pitch angle, the rotor torque, etc.

When multiple wind turbines feed into a grid, such setpoints are generally determined by a wind park controller with the aim of limiting active output power from the wind farm, to maintain a certain level of reactive power, to sustain grid voltage, etc. In a wind park comprising many wind turbines arranged in a group, some wind turbines will be situated downwind of others. Wind turbines at the front of such a group will be subject to the full force of the wind, while downwind turbines are effectively "shadowed" by the turbines at the front. Furthermore, shadowed wind turbines may be subject to turbulence in the wake of the wind turbines at the fore. The known methods of controlling wind turbines of a wind park are generally focussed on controlling the power output, on the basis of the available power, i.e. the power that a wind turbine could deliver under the momentary conditions, and a wind park controller can deliver power and/or voltage setpoints accordingly. However, even if the power output of the wind park can be optimised fairly well using the known methods, other important factors relating to the effects of turbulence, vibration, wear etc. cannot be taken into consideration.

It is therefore an object of the invention to provide an improved way of controlling a wind turbine or the wind turbines of a wind park.

This object is achieved by the method of claim 1 of controlling a wind turbine, by the wind park controller of claim 7, by the wind turbine controller of claim 9, and by the wind park of claim 14.

According to the invention, the method of controlling a wind turbine comprises the steps of obtaining a number of operating values relevant to a wind turbine; calculating a thrust setpoint for control of a wind turbine on the basis of the operating values; and controlling a wind turbine according to a thrust setpoint.

An operating value can comprise any measurable quantity of any turbine that is related to the thrust acting on the wind turbine. For example, an operating value can comprise a thrust force, wind direction, a unit lifetime consumption of the wind turbine, a measure of the vibration experienced by the wind turbine, turbine component loading, etc. Turbine component loading can manifest as the loading of any structural component of the turbine, for example as main shaft deflections, tower oscillations, etc., depending on the turbine type. Severe loading due to a turbulent wake, resulting in a high consumption rate, is generally caused by variations in thrust, or thrust fluctuations. Turbine lifetime consumption and turbine lifetime consumption rate are terms that take into account the structural wear and tear on the turbine as a fraction of the typical lifetime for that turbine type. The construction date of the turbine can be used as a reference, and the fatigue damage on the structural components is compared to the expected fatigue damage for that wind turbine type. Turbine component loading and fatigue damage result largely as a result of the wind thrust force acting on the wind turbine.

One or more such operating values are then used to compute a thrust setpoint. A thrust setpoint for a wind turbine is to be understood as a maximum thrust force that should be endured by that turbine. The thrust setpoint can be issued as a "real time" control input to the wind turbine, which reacts by operating such that this maximum thrust force level is not exceeded. An advantage of the method according to the invention is that a wind turbine can then be controlled according to such a thrust setpoint, in addition to the usual setpoints such as a rotational speed, power or voltage setpoint.

The method according to the invention allows the operation of a wind turbine to be favourably optimised with respect to thrust. For example, a thrust setpoint for a wind turbine can be computed to have the effect of decreasing the absolute thrust experienced by that wind turbine, and can result, for example, in a reduction in the thrust fluctuations experienced by that wind turbine or another downwind wind turbine.

According to the invention, the wind park controller for controlling a number of wind turbines of a wind park comprises an input for obtaining operating values for a number of wind turbine of the wind park; and a thrust setpoint generating unit for generating a number of thrust setpoints for a number of wind turbine of the wind park on the basis of the operating values.

An advantage of such a wind park controller according to the invention is that it can issue one or more thrust setpoints to the various wind turbines of the wind park with the effect of increasing the efficiency of the wind turbine array.

According to the invention, the wind turbine controller for a wind turbine comprises a parameter computation unit for computing operational parameters on the basis of a thrust setpoint (in addition to the usual power reference and a voltage reference).

According to the invention, the wind park comprises a number of wind turbines, wherein the wind turbines are controlled using the method according to the invention.

In a wind park according to the invention, thrust setpoints can be dispatched to any or all of the wind turbines in the wind park, and the relevant wind turbine controllers will ensure that their maximum thrust levels are not exceeded, so that the power production of the wind park can be favourably optimized in accordance with this constraint also.

Particularly advantageous embodiments and features of the invention are given by the dependent claims, as revealed in the following description. Features of different claim categories may be combined as appropriate to give further embodiments not described herein.

As mentioned in the introduction, the wind turbines of a wind park are exposed by different amounts to the wind power, depending on their positions in the wind turbine array. Therefore, in a particularly preferred embodiment of the invention, the operating values determined for a wind turbine are used to calculate a thrust setpoint for another wind turbine. For example, the thrust force exerted on a downwind wind turbine as a result of wake turbulence caused by an upwind wind turbine can be used to derive a new thrust setpoint for the upwind wind turbine, so that the wake turbulence experienced by the downwind wind turbine is decreased.

The thrust force essentially acts on the rotor blades of a wind turbine, and can be computed by taking into account certain factors such as the relevant dimensions of the wind turbine. For example, the thrust force can be expressed by the following equation:

$$F_{THRUST} = \frac{1}{2} \cdot \rho \cdot A \cdot C_T(\lambda, \beta) \cdot v^2 \qquad (1)$$

where $F_{THRUST}$ is the thrust (in Newtons) exerted by the wind on the rotor; $\rho$ is the air density (kg/m$^3$); A is the rotor disc area or "rotor swept area" (m$^2$); $\lambda$ is the blade tip speed ratio; $\beta$ is the pitch angle (°); $C_T$ is a thrust coefficient and a function of A and $\beta$; and $v$ is the rotor effective wind speed (m/s).

The momentary thrust force can be estimated based on known or measurable information such as blade pitch angle, power output, rotor speed, etc. The rotor effective wind speed is the average wind speed across the rotor disc of a wind turbine. The rotor effective wind speed can be estimated by means of instruments such as an anemometer arranged on the canopy or nacelle of the wind turbine, or can be estimated using parameters monitored by the wind turbine controller, for example rotor rotational speed, pitch angle, power, etc.

In certain cases, the thrust force may be measured indirectly, for example by measuring the tower acceleration or tower loads using a sensor such as a strain gauge. In this way, the momentary thrust force acting on a wind turbine can be obtained and analysed to determine whether it is acceptable, or whether the thrust force acting on a turbine can be increased, or whether it should be decreased.

A wind turbine generates electrical energy by extracting kinetic energy from the wind. As a result, when wind passes through the rotor disc of a wind turbine, it will lose a portion of its energy, and thereby lose velocity as well. Furthermore, the turbulence in the wake of a wind turbine can be increased by that wind turbine.

The power captured by the rotor disc will depend on the power available from the wind, and also on the capability of the wind turbine. This "available power" can be expressed as

$$P = P_{WIND} \cdot C_P(\lambda, \beta) \qquad (2)$$

where $P_{WIND}$ is the power available from the wind (Watts), and $C_P$ is the power coefficient for that wind turbine.

The power captured by the wind turbine can also be expressed as:

$$P = \frac{1}{2} \cdot \rho \cdot A \cdot C_P(\lambda, \beta) \cdot v^3 \qquad (3)$$

The coefficients $C_T$ and $C_P$ are turbine-specific and can be computed with regard to rotor characteristics such as airfoil geometry, rotor properties, and turbine operational trajectories. For example, the computation of the power coefficient as a function of blade-tip speed ratio and pitch angle can be based on assumptions regarding the operational characteristics and blade profile information, and can be computed using a blade element momentum (BEM) code. These coefficients $C_T$, $C_P$ may be stored as lookup tables in a memory, for example in a memory of the wind park controller and/or a memory of the wind turbine controller.

In a particularly preferred embodiment of the invention, the thrust setpoint for a wind turbine is computed to optimize the power that can be output by a wind turbine versus the thrust that will be exerted on that turbine. In other words, a wind turbine will be driven to output a maximum of power while not being subject to a thrust exceeding that governed by its thrust setpoint. In a preferred embodiment of the invention, a thrust setpoint for a wind turbine is calculated to specify the maximum thrust force that should be experienced by that wind turbine. For example, the thrust setpoint can be calculated to alter, preferably to decrease, the thrust exerted on that wind turbine. A thrust setpoint can be expressed, for example, as a value in newtons.

A thrust setpoint calculated for a wind turbine can be used by that wind turbine in a number of ways. To this end, using equation (1) above with the thrust setpoint as $F_{THRUST}$, the wind turbine controller can determine a new $C_T$ value, which in turn can be converted into relevant control signals for the various controllable parts of the wind turbine, for example to adjust the blade pitch angle or the yaw angle so that the thrust force acting on the rotor disc is reduced. To this end, the wind turbine controller can consult predefined operating trajectories and look-up tables, from which it can obtain appropriate control parameters for the relevant controllable elements of the wind turbine. In this way, the wind turbine controller can convert the new thrust setpoint into control signals that not only ensure that the maximum thrust level should not be exceeded, but also honour the momentary voltage and/or power references or setpoints that apply.

In another preferred embodiment of the invention, the thrust setpoint for a first wind turbine is calculated to decrease the loading of a second wind turbine shadowed by the first wind turbine. For example, the thrust setpoint for an upwind turbine can be calculated so that, when converted into control signals for that upwind turbine, the wake turbulence downwind of that wind turbine is reduced. In this way, the shadowed wind turbine(s) will experience a smoother airflow and be subject to less wear. Preferably, the wind direction is also used as a basis for determining the thrust setpoints issued to one or more wind turbines, to obtain a desired loading distribution over the wind park.

The method according to the invention can make use of the fact that the wake downwind of a wind turbine is altered as a result of the thrust acting on that wind turbine, and can therefore be controlled to some extent by the thrust setpoint issued to that wind turbine. Therefore, in a preferred embodiment of the invention, a plurality of thrust setpoints is issued to wind turbines of a wind park, wherein the thrust setpoints are calculated to adjust an overall wake distribution in the wind park. In this way, for example, a less turbulent wake distribution can be achieved for a plurality of downwind turbines.

The wind park controller is preferably able to control the wind turbines in a specific manner, such that at any given time, the wind turbines receive thrust setpoints for optimising their performance. Since the effect of thrust will generally be different across the wind park, the wind park controller according to the invention preferably comprises a thrust setpoint distribution unit for distributing thrust setpoints to specific wind turbines of the wind park. In this way, each wind turbine can receive a thrust setpoint in response to the thrust exerted on that wind turbine. For example, a group of wind turbines facing into the wind at the fore of the wind park can be collectively given a certain thrust setpoint to optimise a wake distribution in the wind park. Equally, the wind turbines arranged in the "middle" of the wind park can be given a collective thrust setpoint for that region, while wind turbines at the rear of the wind park can be given another collective thrust setpoint. Wind turbines far removed from the front of the wind park may not receive any thrust setpoints at all. Of course, certain wind turbines can be given tailored thrust setpoints. For example, an upwind wind turbine can receive a thrust setpoint that reduces the turbulence for a wind turbine in its shadow. Equally, a shadowed wind turbine can be given a thrust setpoint that takes into account the wake turbulence caused by another wind turbine upwind of it.

In order to be able to evaluate the effect of variables such as wind on the performance of a wind turbine or a wind turbine in its wake, for example, a wind turbine controller according to the invention preferably comprises an operating value determination unit for monitoring, collecting or computing a number of operating values relevant to the thrust force acting on or experienced by that wind turbine. As mentioned above, an operating value can be, for example, wind direction, a unit lifetime consumption of the wind turbine, a measure of the vibration experienced by the wind turbine, turbine component loading, etc.

As indicated above, the thrust force exerted on a wind turbine is coupled or linked to the structural loading on that wind turbine. Therefore, in a further preferred embodiment of the method according to the invention, the thrust setpoint issued to a wind turbine is evaluated in relation to a maximum thrust reference for that wind turbine. The maximum thrust reference effectively limits the level of aerodynamic thrust that will be experienced by that wind turbine. For example, if the thrust setpoint exceeds the maximum thrust reference, the wind turbine is preferably controlled according to the maximum thrust reference. In this way, a safety measure can be included in a wind turbine controller if required, for example if a wind turbine is to be spared from loads exceeding a certain level. Such a maximum thrust reference for a wind turbine can be updated as the need arises, for example by the wind park controller.

Since wind turbines are more often utilized as part of a wind park comprising many wind turbines, a wind turbine controller according to the invention preferably comprises a operating value output for sending operating values for that wind turbine to a wind park controller, which can then use these values in an appropriate manner, for example to issue a thrust setpoint back to that wind turbine on the basis of those operating values, and/or to issue a thrust setpoint to one or more other wind turbines on the basis of those operating values.

Preferably, the wind turbine controller is realized to act in response to a thrust setpoint received from a wind park controller in addition or as an alternative to a thrust setpoint that it calculates itself using its own operating values. Therefore, in a preferred embodiment of the invention, the parameter computation unit is realised to compute the operational parameters on the basis of a thrust setpoint provided by a wind park controller and/or on the basis of the operating values for that wind turbine.

The setpoints received by a wind turbine controller are preferably converted into control signals that are applied to the wind turbine to optimise its performance with respect to various aspects such as maximising output power, minimising noise, etc. In the wind turbine controller according to the invention, such control signals are generated not only on the basis of the usual power and/or voltage setpoints, but also on the basis of a thrust setpoint. Therefore, in a preferred embodiment of the invention, the parameter computation unit is realised to compute a blade pitch reference signal and/or a yaw reference signal and/or a power/torque reference signal on the basis of the thrust setpoint in addition to or as an alternative to other setpoints.

Other objects and features of the present invention will become apparent from the following detailed descriptions considered in conjunction with the accompanying drawings. It is to be understood, however, that the drawings are designed solely for the purposes of illustration and not as a definition of the limits of the invention.

Fig. 1 shows a schematic representation of a prior art wind park and wind park controller;

Fig. 2 shows a block diagram of a wind turbine controller according to an embodiment of the invention;

Fig. 3 shows a schematic representation of a wind park and wind park controller according to an embodiment of the invention.

In the diagrams, like numbers refer to like objects throughout. Objects in the diagrams are not necessarily drawn to scale.

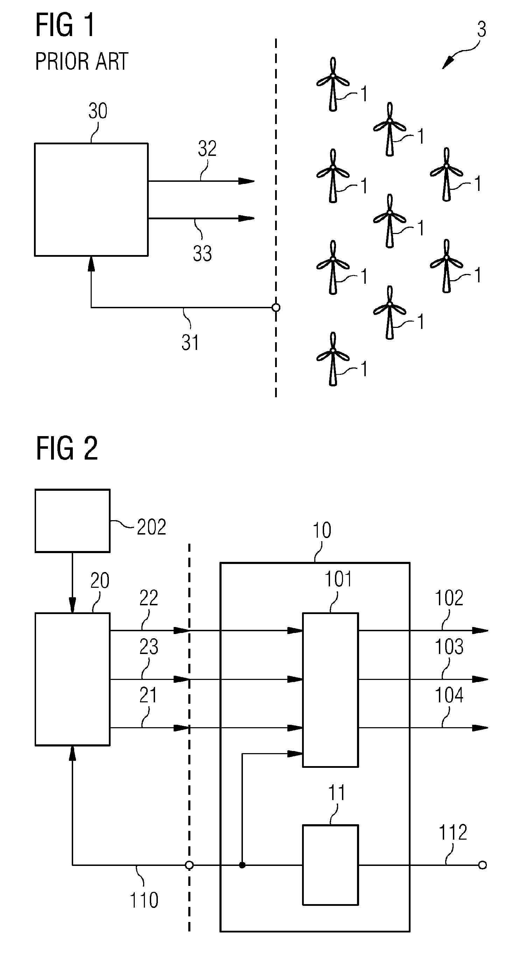

Fig. 1 shows a schematic representation of a prior art wind park 3 and wind park controller 30. The prior art wind park controller 30 can monitor the output performance of the wind park 3 using values 31 delivered from a collector network or point of common connection of the wind turbines 1. The wind turbines 1 are arranged in an array or farm. The rotor discs of the wind turbines 1 are generally controlled to face into the wind, so that some wind turbines 1 will be upwind of the other wind turbines 1, of which some are in the middle of the farm and others at the rear. In the diagram, for the sake of argument, it may be assumed that the wind is travelling from left to right. Therefore, the upwind or upstream wind turbines 1 to the left in the diagram are exposed to a relatively high wind speed and have a correspondingly high available power. The wind turbines 1 behind the upwind units will experience a lower wind speed, so that their available power will be lower. The prior art wind park controller 3 can only react by issuing voltage and power setpoints 32, 33 for example to curtail the output power of some of the wind turbines and to allow others to operate according to their available power. However, the prior art park controller 3 can not control the wind turbines to take thrust force or wake distribution into account. Therefore, the power output of the wind park 3 may be less than optimal owing to the wake distribution over the wind park 3, and the wind turbines 1 may be subject to avoidable wear and tear.

Fig. 2 shows a block diagram of a wind park controller 20 and a wind turbine controller 10 according to an embodiment of the invention. A wind turbine controller 10, usually arranged in the tower or nacelle of a wind turbine, is generally quite a distance removed from a wind park controller 20, as indicated by the dashed line. In this embodiment, the wind turbine controller 10 comprises a parameter computation unit 101 for generating control parameters for the wind turbine, for example a blade pitch reference signal 102, a yaw reference signal 103, and a power/torque reference signal 104. The wind turbine controller 10 also comprises an operating value determination unit 11 for determining one or more operating values 110, which are output to a wind park controller 20. or example, as described above, such operating values can comprise strain gauge values, oscillation values, consumption values, thrust force values, etc., using measurements 112 from one or more sources. In addition to or as an alternative to these operating values 110, the wind park controller 20 can receive meteorological readings from an external source 202, for example from a meteorological mast 202, and can use such readings to compute thrust setpoints based, for example, only on wind direction, wind speed, etc. The wind park controller 20 then computes a voltage setpoint 22 and a power setpoint 23, and also a thrust setpoint 21, for one or more wind turbines.

In the wind turbine controller, the parameter computation unit 101 receives a voltage setpoint 22 and a power setpoint 23 from the wind park controller, and also a thrust setpoint 21. The parameter computation unit 101 can therefore take all these setpoints 21, 22, 23 into consideration when generating the control parameters 102, 103, 104 for the wind turbine.

The operating values 110 can also be forwarded to the parameter computation unit 101. This allows the parameter computation unit 101 of a standalone wind turbine to use the operating value 110 to minimize the loading of that wind turbine. In such a standalone configuration, only the parts of the diagram to the right of the dashed line are relevant.

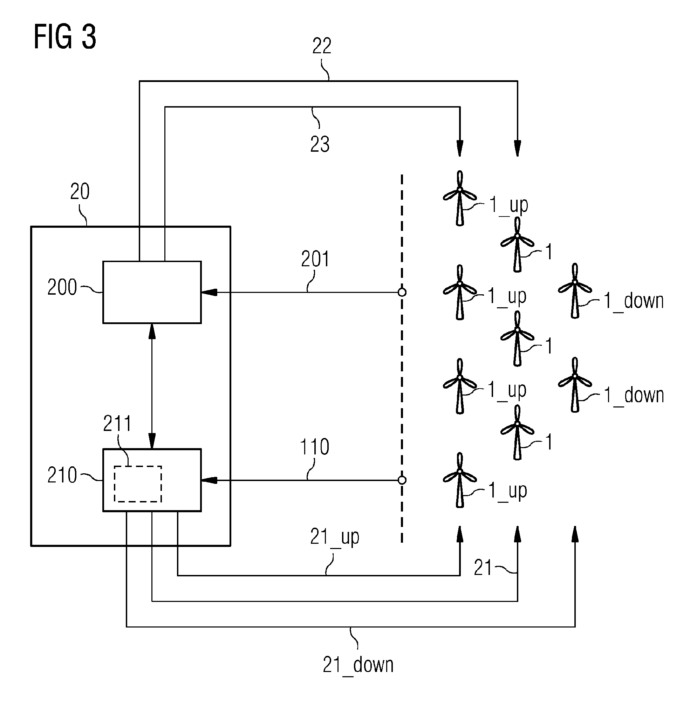

Fig. 3 shows a schematic representation of a wind park 2 and wind park controller 20 according to an embodiment of the invention. Here, some or all of the wind turbines 1, 1_up, 1_down comprise a wind turbine controller 10 as described in Fig. 2. The wind park controller 2 obtains data 201 relating to the power output at the point of common connection, as well as operating values 110 received from the wind turbine controllers 10 of the wind turbines 1, 1_up, 1_down. The operating values 110 delivered by the upwind units 1_up will differ from the operating values 110 delivered by the other units 1, 1_down. Here, the wind park controller 20 comprises a setpoint generation unit 200 for calculating voltage and power setpoints 22, 23 for the wind turbines 1, 1_up, 1_down; and a thrust setpoint generation unit 210 for generating thrust setpoints 21, 21_up, 21_down for the wind turbines 1, 1_up, 1_down according to their position in the wind farm 2 for the momentary wind situation. The thrust setpoint generation unit 210 and the setpoint generation unit 200 can be realised as software modules running on a processor of the wind park controller 20, and can exchange information as indicated here by the arrow.

The wind park controller 20 can also comprise a thrust setpoint distribution unit 211 for identifying which wind turbines are to receive specific thrust setpoints. In this way, the wind park 20 controller according to the invention can optimise the power output of the wind farm 2 in consideration of the thrust force exerted on the individual wind turbines 1, 1_up, 1_down, e.g. the wind park 20 controller can maximise the power output of the wind farm 2 while minimizing the thrust force exerted on the individual wind turbines 1, 1_up, 1_down.

Although the present invention has been disclosed in the form of preferred embodiments and variations thereon, it will be understood that numerous additional modifications and variations could be made thereto without departing from the scope of the invention. For example, the wind park controller could generate customized voltage and power setpoints for certain wind turbines of a wind park on the basis of the operating values delivered by wind turbines of the wind park.

For the sake of clarity, it is to be understood that the use of "a" or "an" throughout this application does not exclude a plurality, and "comprising" does not exclude other steps or elements. A unit or module does not preclude the use of several units or modules.

## Claims

1.    A method of controlling a wind turbine (1, 1_up, 1_down), which method comprises the steps of

- obtaining a number of operating values (110) relevant to a wind turbine (1, 1_up, 1_down); and
- calculating a thrust setpoint (21, 21_up, 21_down) on the basis of the operating values (110); and
- controlling a wind turbine (1, 1_up, 1_down) according to a thrust setpoint (21, 21_up, 21_down).

2.    A method according to claim 1, wherein the operating values (110) determined for a wind turbine (1, 1_up, 1_down) are used to calculate a thrust setpoint (21, 21_up, 21_down) for another wind turbine (1, 1_up, 1_down).

3.    A method according to claim 1 or claim 2, wherein a thrust setpoint (21, 21_up, 21_down) for a wind turbine (1, 1_up, 1_down) is calculated to adjust the thrust force acting on that wind turbine (1, 1_up, 1_down).

4.    A method according to any of the preceding claims, wherein a thrust setpoint (21_up) for a first wind turbine (1_up) is calculated to decrease the loading of a second wind turbine (1_down) shadowed by the first wind turbine (1_sup).

5.    A method according to any of the preceding claims, wherein a plurality of thrust setpoints (21, 21_up, 21_down) is issued to wind turbines of a wind park (2), wherein the thrust setpoints (21, 21_up, 21_down) are calculated to adjust a wake distribution in the wind park (2).

6.    A method according to any of the preceding claims, wherein a thrust setpoint (21, 21_up, 21_down) and further setpoints (22, 23) for a wind turbine (1, 1_up, 1_down) are computed such that the power that can be output by that wind turbine (1, 1_up, 1_down) is optimized with respect to the thrust that will be exerted on that turbine (1, 1_up, 1_down).

7.    A method according to any of the preceding claims, wherein a thrust setpoint (21, 21_up, 21_down) for a wind turbine is computed to not exceed a maximum thrust reference for that wind turbine (1, 1_up, 1_down).

8.    A wind park controller (20) for controlling a number of wind turbines (1, 1_up, 1_down) of a wind park (2), which wind park controller (20) comprises

- an input for obtaining operating values (110) for a number of wind turbines (1, 1_up, 1_down) of the wind park (2); and
- a thrust setpoint generating unit (210) for generating a number of thrust setpoints (21, 21_up, 21_down) for a number of wind turbines (1, 1_up, 1_down) of the wind park (2) on the basis of the operating values (110).

9. A wind park controller according to claim 8, comprising a thrust setpoint distribution unit (211) for distributing thrust setpoints (21, 21_up, 21_down) to specific wind turbines of the wind park (2).

10. A wind turbine controller (10) for a wind turbine (1, 1_up, 1_down) comprising a operating value determination unit (11) for determining a number of operating values (110) for that wind turbine (1, 1_up, 1_down).

11. A wind turbine controller according to claim 11, comprising a operating value output for sending operating values (110) for that wind turbine (1, 1_up, 1_down) to a wind park controller (20).

12. A wind turbine controller according to any of claims 10 to 12, comprising a parameter computation unit (101) realised to compute operational parameters (102) on the basis of a thrust setpoint (21) provided by a wind park controller (20) and/or on the basis of the operating values (110) for that wind turbine (1, 1_up, 1_down).

13. A wind turbine controller according to any of claims 10 to 12, wherein the parameter computation unit (101) is realised to compute a blade pitch reference signal (102) and/or a yaw reference signal (103) and/or a power/torque reference signal (104) on the basis of the thrust setpoint (21).

14. A wind park (2) comprising a number of wind turbines (1, 1_up, 1_down), wherein the wind turbines (1, 1_up, 1_down) of the wind park (2) are controlled using the method according to any of claims 1 to 7.

15. A wind park according to claim 14, comprising a wind park controller (20) according to any of claims 7 or 8 and wherein at least one wind turbine (1, 1_up, 1_down) comprises a wind turbine controller (10) according to any of claims 10 to 13.

FIG 1
PRIOR ART

FIG 2

FIG 3

Europäisches
Patentamt

European
Patent Office

Office européen
des brevets

# EUROPEAN SEARCH REPORT

**Application Number**

EP 11 19 3824

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 063 108 A2 (GEN ELECTRIC [US]) 27 May 2009 (2009-05-27) * figures * * paragraphs [0003] - [0008], [0014] - [0027] * ----- | 1-15 | INV. F03D7/04 |
| X | EP 1 790 851 A2 (GEN ELECTRIC [US]) 30 May 2007 (2007-05-30) * figures * * paragraphs [0003] - [0031] * ----- | 1-15 | |
| X | WO 2004/111446 A1 (ENERGIEONDERZOEK CT NEDERLAND [NL]; CORTEN GUSTAVE PAUL [NL]; SCHAAK P) 23 December 2004 (2004-12-23) * figures * * page 5, line 6 - page 7, line 33 * ----- | 1-15 | |
| X | WO 2010/057737 A2 (VESTAS WIND SYS AS [DK]; NIELSEN THOMAS STEINICHE BJERT [DK]; ABDALLAH) 27 May 2010 (2010-05-27) * page 9, line 16 - page 10, line 12 * ----- | 1-15 | TECHNICAL FIELDS SEARCHED (IPC) |
| X | US 2011/156393 A1 (WAKASA TSUYOSHI [JP] ET AL) 30 June 2011 (2011-06-30) * figure 3 * * claim 1 * ----- | 1,3,10, 12 | F03D |

The present search report has been drawn up for all claims

| Place of search | Date of completion of the search | Examiner |
|---|---|---|
| The Hague | 14 May 2012 | Altmann, Thomas |

EPO FORM 1503 03.82 (P04C01)

## ANNEX TO THE EUROPEAN SEARCH REPORT
## ON EUROPEAN PATENT APPLICATION NO.

EP 11 19 3824

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2012

| Patent document cited in search report | | Publication date | Patent family member(s) | | Publication date |
|---|---|---|---|---|---|
| EP 2063108 | A2 | 27-05-2009 | CN | 101413483 A | 22-04-2009 |
| | | | EP | 2063108 A2 | 27-05-2009 |
| | | | US | 2009099702 A1 | 16-04-2009 |
| EP 1790851 | A2 | 30-05-2007 | CN | 1975155 A | 06-06-2007 |
| | | | EP | 1790851 A2 | 30-05-2007 |
| | | | US | 2007124025 A1 | 31-05-2007 |
| WO 2004111446 | A1 | 23-12-2004 | AU | 2004248072 A1 | 23-12-2004 |
| | | | CA | 2539647 A1 | 23-12-2004 |
| | | | CN | 1856645 A | 01-11-2006 |
| | | | EP | 1633976 A1 | 15-03-2006 |
| | | | JP | 2006527334 A | 30-11-2006 |
| | | | KR | 20060059900 A | 02-06-2006 |
| | | | NL | 1023666 C2 | 20-12-2004 |
| | | | US | 2006232073 A1 | 19-10-2006 |
| | | | WO | 2004111446 A1 | 23-12-2004 |
| WO 2010057737 | A2 | 27-05-2010 | EP | 2352917 A2 | 10-08-2011 |
| | | | US | 2011309621 A1 | 22-12-2011 |
| | | | WO | 2010057737 A2 | 27-05-2010 |
| US 2011156393 | A1 | 30-06-2011 | AU | 2004316333 A1 | 09-09-2005 |
| | | | CA | 2557396 A1 | 09-09-2005 |
| | | | CN | 1906409 A | 31-01-2007 |
| | | | EP | 1719910 A1 | 08-11-2006 |
| | | | JP | 4599350 B2 | 15-12-2010 |
| | | | KR | 20070026362 A | 08-03-2007 |
| | | | TW | I261088 B | 01-09-2006 |
| | | | US | 2008206051 A1 | 28-08-2008 |
| | | | US | 2010187820 A1 | 29-07-2010 |
| | | | US | 2011156393 A1 | 30-06-2011 |
| | | | US | 2011309622 A1 | 22-12-2011 |
| | | | WO | 2005083266 A1 | 09-09-2005 |

EPO FORM P0459

For more details about this annex : see Official Journal of the European Patent Office, No. 12/82